# EUROPEAN PATENT APPLICATION

(11) **EP 1 775 715 A1**
(43) Date of publication of application: **18.04.2007**
(21) Application number: 05755889.2
(22) Date of filing: 30.06.2005
(51) Int. Cl.: G10K 15/00, G10K 15/12, G11B 20/12, G11B 20/10, G11B 27/00

(54) **RECORDING MEDIUM, RECORDING DEVICE AND METHOD, DATA PROCESSING DEVICE AND METHOD, AND DATA OUTPUT DEVICE**

(30) Priority: 14.07.2004 JP 2004207025
(71) Applicant: SONY CORPORATION, Tokyo 141-0001 (JP)
(72) Inventor: SAKO, Yoichiro, c/o SONY CORPORATION, Tokyo 1410001 (JP); MIURA, Masayoshi, c/o SONY CORPORATION, Tokyo 1410001 (JP); TERAUCHI, Toshiro, c/o SONY CORPORATION, Tokyo 1410001 (JP); YABE, Susumu, c/o SONY CORPORATION, Tokyo 1410001 (JP)
(74) Representative: Nicholls, Michael John
(86) International application number: PCT/JP2005/012074
(87) International publication number: WO 2006/006418

(57) **Abstract**

Disclosed is an apparatus for reproducing main data under an optimum reproduction environment. The reproducing apparatus includes a readout unit (20) for reading out predetermined main data and spatial characteristic data, made up of the information on characteristics of a space in an environment different from the environment under which the main data is to be reproduced, from a recording medium (1) on which the main data and the spatial characteristic data have been recorded. The reproducing apparatus also includes a processing unit (25) for performing predetermined processing for reproduction of the main data, based on the spatial characteristic data read out by the readout unit (20).

## Description

### Technical Field

This invention relates to a recording medium, on which main data and predetermined environmental parameters have been recorded, and to a data processing apparatus and a data processing method for reading out and reproducing main data and predetermined environmental parameters recorded on the recording medium.
This application claims priority based on the Japanese Patent Application 2004-207025, filed in Japan on July 14, 2004. This Application of the earlier data is to be incorporated by reference in the present application.

### Background Art

In a music concert for classics, jazz or pops, in an opera or in a theatrical concert, the spatial acoustical characteristics of the sound, such as reverberation or reflection characteristics of the sound, differ from one hall where the concert is held to another. Hence, the performance by the same artist will generate an atmosphere or a feeling which may differ from one such hall to another. On the other hand, a user is able to experience the atmosphere or feeling peculiar to a given hall for musical performance if he/she actually visits the hall to listen to the performance, or if he/she reproduces a sound source which has recorded the sound in the concert.
A method for correcting response characteristics of a sound field of a predetermined site to desired characteristics has been disclosed in, for example, the JP Laid-Open Patent Publication H6-327089. On the other hand, a method for superimposing reverberation components in a predetermined hall on succeeding reverberation components and measuring the resulting components has been disclosed in the JP Laid-Open Patent Publication 2003-263179.

### Disclosure of the invention

### Problems to be solved by the Invention

Meanwhile, a user may have a desire to experience an opera performed in a certain opera theater as if he/she is experiencing the same opera in another opera theater having better acoustical environment, such as La Scala in Milano, Italia, or Opera in Paris. The user may also have the desire to experience the music, recorded in a studio, with the atmosphere or feeling of a predetermined site for live performance.
To solve the above problem, the present invention provides a recording medium on which are recorded main data and a plural number of spatial parameters pertinent to the main data, and an apparatus and a method for recording a plural number of spatial parameters, pertinent to the main data, on a recording medium. The present invention also provides an apparatus and a method for data processing in which the main data and the plural spatial parameters pertinent to the main data are read out from the recording medium, and an apparatus and a method for data outputting in which the user may be furnished, over a network, with main data and a plural number of spatial parameters pertinent to the main data.
A recording medium according to the present invention has recorded thereon predetermined main data and spatial characteristic data made up of the information on characteristics of a space in an environment different from the environment under which the main data is to be reproduced.
A recording apparatus according to the present invention includes multiplexing means for multiplexing predetermined main data and spatial characteristic data made up of the information on characteristics of a space in an environment different from the environment under which the main data is to be reproduced, and processing means for performing predetermined processing on data multiplexed by the multiplexing means. The recording apparatus also includes recording means for recording data processed by the processing means on a recording medium.
A recording method according to the present invention includes a multiplexing step of multiplexing predetermined main data and spatial characteristic data, made up of the information on characteristics of a space in an environment different from the environment under which the main data is to be reproduced, and a processing step of performing predetermined processing on data multiplexed by the multiplexing step. The recording method also includes a recording step of recording data processed by the processing step on a recording medium.
A data processing apparatus according to the present invention includes readout means for reading out predetermined main data and spatial characteristic data, made up of the information on characteristics of a space in an environment different from the environment under which the main data is to be reproduced, from a recording medium on which the predetermined main data and the spatial characteristic data have been recorded. The data processing apparatus also includes processing means for performing predetermined processing for reproduction of the main data, based on the spatial characteristic data read out by the readout means.
A data processing method according to the present invention includes a readout step of reading out predetermined main data and spatial characteristic data, made up of the information on characteristics of a space in an environment different from the environment under which the main data is to be reproduced, from a recording medium on which the predetermined main data and the spatial characteristic data have been recorded, and a reproduction processing step of performing predetermined processing for reproduction of the main data, based on the spatial characteristic data read out by the readout step.
A data outputting apparatus according to the present invention includes a first database in which a plurality of main data have been stored, and a second database in which spatial characteristic data, made up of the information on characteristics of a space in an environment different from the environment under which the main data is to be reproduced, have been stored. The data outputting apparatus also includes selection means for selecting predetermined main data from the first database, and first readout means for reading out main data, selected by the selection means, from the first database. The data outputting apparatus also includes second readout means for reading out the spatial characteristic data, associated with the main data read out by the first readout means, from the second database, and outputting means for outputting, in unison, the main data read out by the first readout means and the spatial characteristic data read out by the second readout means.
A data outputting method according to the present invention includes a first readout step of reading out predetermined main data from a first storage unit where a plurality of main data are stored, and a second readout step of reading out, from a second storage unit in which spatial characteristic data made up of the information on characteristics of a space in an environment different from an environment, where the main data is to be reproduced, have been stored, the spatial characteristic data associated with the main data read out in the first readout step. The data outputting method also includes an outputting step of outputting, in unison, the main data read out by the first readout step and the spatial characteristic data read out by the second readout step.
With the use of the present invention, a user may enjoy the sound of a musical number or a motion picture under an acoustical environment similar to the environments of any of a variety of theaters, halls, live performance sites, churches or outdoor performance sites. Since a variety of spatial characteristic data, as selected by a producer, are pre-recorded on a recording medium, the user may enjoy the music or the motion picture of the same source under a variety of different environments subject to selection of optional spatial characteristic data.
Other objects and specified advantages of the present invention will become more apparent from the following explanation of preferred embodiments thereof which will now be made conjunction with the drawings.

### Brief Description of the Drawings

Fig.1 is a plan view showing a recording region of a recording medium according to the present invention.
Fig.2 is a flowchart for illustrating a sequence of operations for measuring spatial characteristic data by a proximate four-point method.
Fig.3 is a block diagram showing the constitution of a recording apparatus according to the present invention.
Fig.4 is a block diagram showing the constitution of a reproducing apparatus according to the present invention.
Fig.5 is a flowchart for illustrating an example of the operation of a reproducing apparatus shown in Fig.4.
Fig.6 is a block diagram showing the constitution of a spatial characteristic data providing system according to the present invention.
Fig.7 is a flowchart for illustrating an illustrative operation of the spatial characteristic data providing system shown in Fig.6.

### Best Mode for Carrying out the Invention

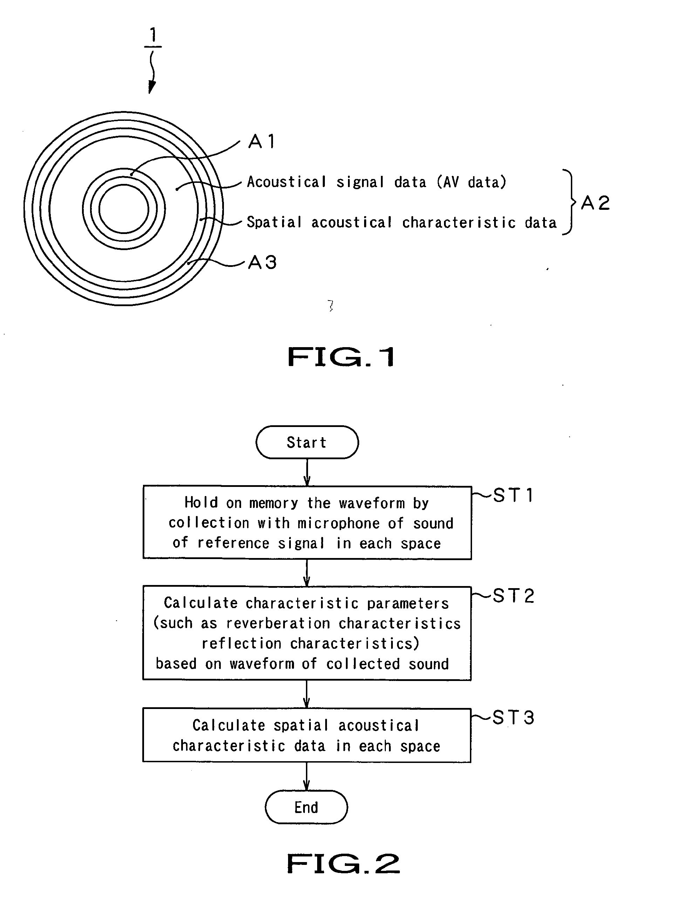

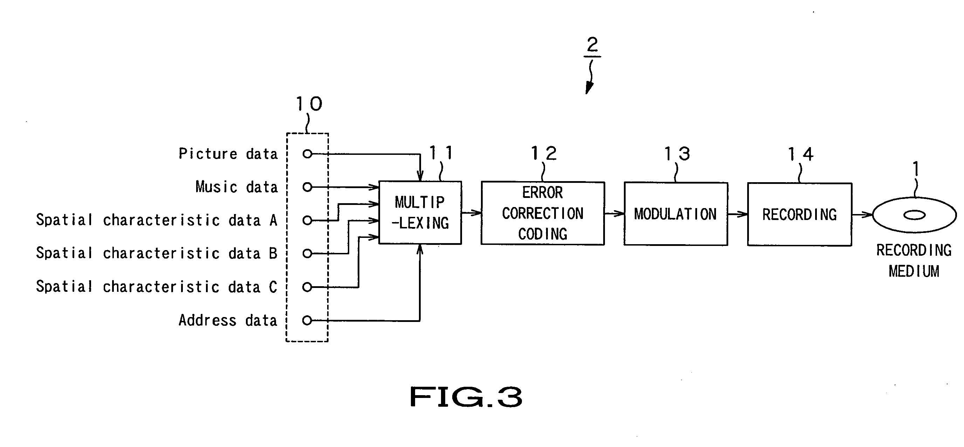

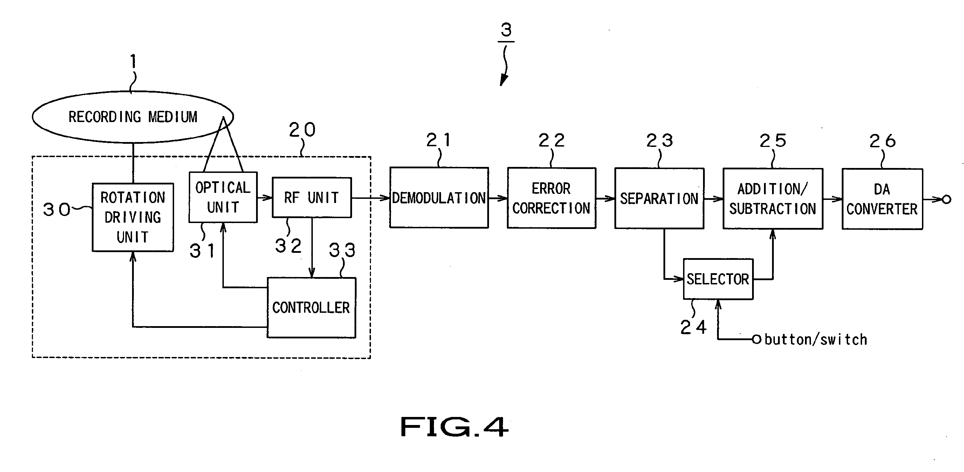

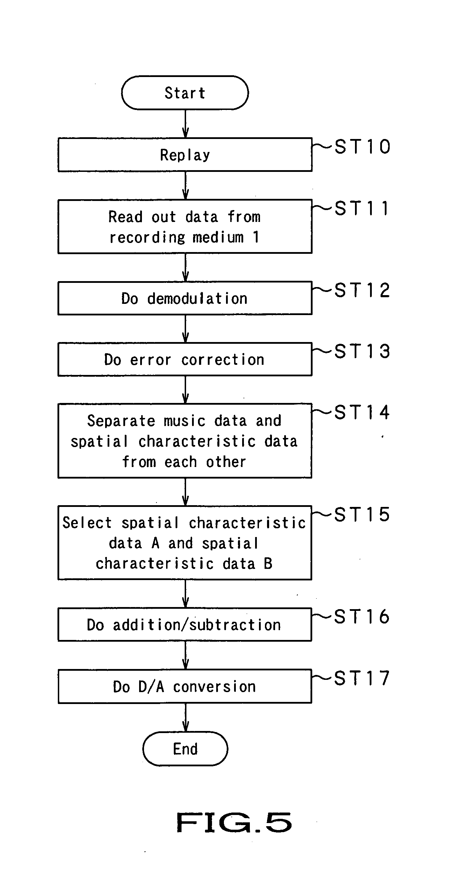

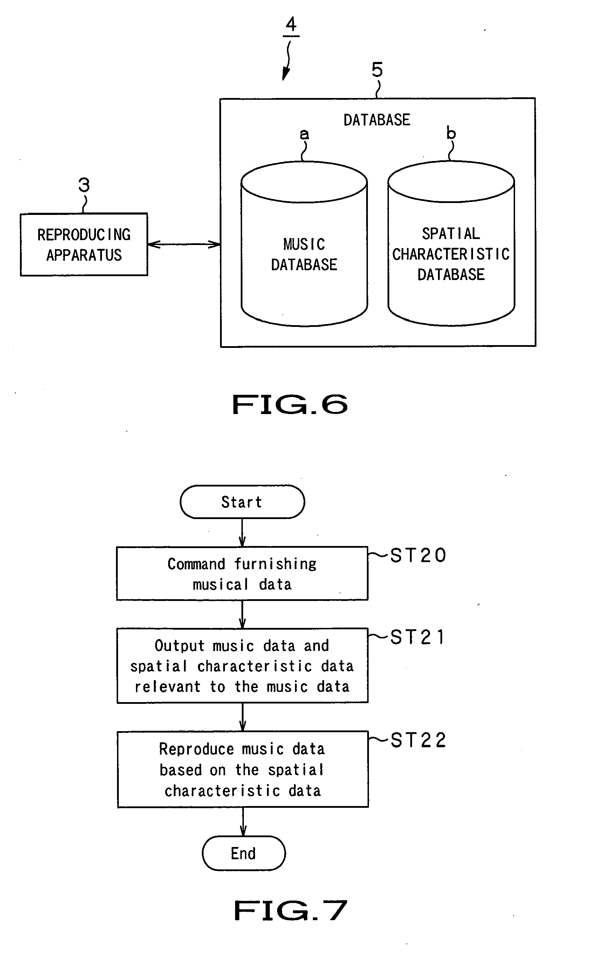

In the following, a recording medium, having preset data recorded thereon, a recording apparatus for recording predetermined data on the recording medium, and a reproducing apparatus for reproducing the data recorded on the recording medium, embodying the present invention, will be described with reference to the drawings.
The recording medium 1, embodying the present invention, has recorded thereon main data and spatial characteristic data which are the information on characteristics of the space in one or more of a variety of predetermined reproducing environments under which the main data are reproduced. The main data may be picture data or music data. In case the recording medium 1 is a disc-shaped recording medium, including a lead-in area A1, a program area A2 and a lead-out area A3, the main data and the spatial characteristic data are recorded in the program area A2.
The spatial characteristic data include reflection or reverberation characteristics of the sound in a predetermined reproducing environment under which the main data, such as music data, are reproduced. The spatial characteristic data may be generated by the results of measurement, such as by a proximate four-point method.
The proximate four-point method will now be described. It is one of methods for measuring the special information of the sound field, such as concert hall, place of live performance, church or outdoor space for performance. In this method, microphones are placed at four points, lying not in the same plane, in order to record the impulse response. In usual measurement, these four points consist of a point of origin and three points lying on three reciprocally perpendicular axes and separated at approximately 5 cm from the point of origin. The incoming time of the same reflected sound is measured by e.g. correlation processing, based on a slight difference in the temporal phase of the impulse response recorded. The distance from the four sound receiving points and the incoming direction are calculated to decide on the position of the equivalent reflected sound and the virtual sound source.
More specifically, with the proximate four-point method, the sound of the reference signal in a space of each environment is collected by a microphone and the waveform is held on memory, as in a step ST1 of the flowchart shown in Fig.2. Based on the waveform of the collected sound, calculations of characteristic parameters, such as reverberation or reflection characteristics, or the processing for correlation, are carried out in a step ST2, and spatial characteristic data of each space are calculated in a step ST3.
A plural number of different spatial characteristic data may also be recorded on the recording medium 1. Meanwhile, the spatial characteristic data may differ even in the same environment, depending on the particular location of hearing. Consequently, a plural number of the spatial characteristic data, obtained on measurement at different locations in the same environment, may be recorded on the recording medium. In addition, the address and/or the name of the place of generation of the spatial characteristic data may be provided as identification data for the spatial characteristic data on the recording medium.
The spatial characteristic data may also be constituted by the location of the performer (sound source), the location, the size, reflectance characteristics or the sound absorption characteristics of the wall surfaces or the ceiling of the concert hall, or the position of the sound collecting microphone, in place of the reverberation or reflection characteristics of the sound described above. In such case, the processor for calculating the reverberation or reflection characteristics from the above information is provided in a separation unit 23 of a reproducing apparatus 3 as later explained (see Fig.4).
The spatial characteristic data also include data for illumination, objects or the background information, to be appended to the picture data, and are generated by, for example, a personal computer.
Data recording on the recording medium 1 is carried out by a recording apparatus 2, as shown in Fig.3. The constitution and the operation of the recording apparatus 2 will now be described. Referring to Fig.3, the recording apparatus 2 includes a data input unit 10, a multiplexer 11, an error correction coding unit 12, a modulation unit 13 and a recording unit 14. The data input unit 10 receives input data, and the multiplexer 11multiplexes the data entered via data input unit 10. The error correction coding unit 12 applies error correction and encoding to the data obtained on multiplexing by the multiplexer 11. The modulation unit 13 performs preset modulation on the data obtained on error correction and coding by the error correction coding unit 12. The recording unit 14 records the data, obtained on modulation by the modulation unit 13, on the recording medium 1.
The data input unit 10 includes a picture data input unit, supplied with input picture data, a music data input unit, supplied with input music data, a spatial characteristic data inputting unit for inputting spatial characteristic data, and an address data input unit, supplied with input address data. The data received by the respective input units are transmitted to the multiplexer 11. The data input unit 10 may also be provided with a plural number of spatial characteristic data input units for receiving a plural number of different spatial characteristic data.
The multiplexer 11 multiplexes the input picture, music and spatial characteristic data, in accordance with the address data, entered via input unit, and transmits the resulting data to the error correction coding unit 12.
The recording unit 14 records the data, modulated by the modulation unit 13, depending on the sort of the recording medium on which to record the data.
Thus, the recording apparatus 2, according to the present invention, multiplexes the input main data, and spatial characteristic data for an environment different from the environment under which the main data would be reproduced. The recording apparatus then performs preset processing on the multiplexed data, to record the resulting data on the recording medium 1.
The constitution of a reproducing apparatus for reproducing the data recorded on the above recording medium will now be described. It is assumed that music data recorded in a studio, spatial characteristic data A in an illustrious first hall, as measured by the aforementioned proximate four-point method, spatial characteristic data B in an illustrious second hall, as measured in similar manner, and spatial characteristic data C in an illustrious third hall, as measured in similar manner, have been recorded in the program area of the recording medium 1.
Referring to Fig.4, the reproducing apparatus 3 includes a readout unit 20, a demodulating unit 21, an error correction unit 22, a separation unit 23, a selector 24, an addition/ subtraction unit 25 and a D/A converter 26. The readout unit reads out data from the program area of the recording medium 1. The demodulating unit 21 demodulates the read out data. The error correction unit 22 corrects errors in the data, and the separation unit 23 separates music data and the spatial characteristic data from each other. The selector 24 selects one of the plural spatial characteristic data A to C, and the addition/ subtraction unit 25 performs addition of the spatial characteristic data to the music data or subtraction of the spatial characteristic data from the music data. The D/A converter 26 transforms the music data into an analog signal.
The readout unit 20 includes a rotation driving unit 30, an optical unit 31, an RF unit 32 and a controller 33. The rotation driving unit 30 rotationally drives the recording medium 1, and the optical unit 31 reads out data from the recording medium 1. The RF unit 32 generates a variety of data based on data read out by the optical unit 31, and the controller 33 controls the rotation of the rotation driving unit 30 and the operation of the optical unit 31, based on data supplied from the RF unit 32.
The selector 24 selects one of the spatial characteristic data, responsive to the actuation by the user, from the spatial characteristic data A to C separated by the separation unit 23, and sends the so selected spatial characteristic data to the addition/ subtraction unit 25.
The addition/ subtraction unit 25 is responsive to the actuation by the user to add the spatial characteristic data supplied from the selector 24 to the music data supplied from the separation unit 23, or subtracts the spatial characteristic data from the music data. The addition/ subtraction unit then routes the music data, resulting from the addition/ subtraction, to the D/A converter 26.
The operation of the reproducing apparatus 3 in case the music data recorded in the first hall, that is, the music data added by the spatial characteristic data A of the first hall, has been recorded on the recording medium 1, and the reproducing apparatus 3 is to output the music data as if it is the music data performed in the second hall having the spatial characteristic data B, will now be described in accordance with the flowchart shown in Fig.5.
The user carries out preset operations for commanding reproduction of data recorded on the recording medium 1 (step ST10). The readout unit 20 is responsive to the actuation by the user to read out data from the recording medium 1 to route the read-out data to the demodulating unit 21 (step ST11). The demodulating unit 21 demodulates the data supplied from the readout unit 20 in a predetermined manner and routes the demodulated data to the error correction unit 22 (step ST12). The error correction unit 22 performs error correction processing on the data supplied from the demodulating unit 21 to send the error-corrected data to the separation unit 23 (step ST13). The separation unit 23 separates the music data and the spatial characteristic data from each other, based on the error-corrected data, and routes the music data to the addition/ subtraction unit 25, while routing the spatial characteristic data to the selector 24 (step ST14). The selector 24 is responsive to the actuation by the user to select the spatial characteristic data A and B (step ST15).
The addition/ subtraction unit 25 subtracts (removes) the spatial characteristic data A, supplied from the selector 24, from the music data supplied from the separation unit 23, and adds (appends) the spatial characteristic data B to the music data resulting from the subtraction. The addition/ subtraction unit routes the resulting music data to the D/A converter 26 (step ST16). The D/A converter 26 transforms the music data, supplied from the addition/ subtraction unit 25, into analog data, to output the resulting music data (step ST17).
Thus, the reproducing apparatus 3 subtracts (removes) spatial characteristic data, so far added to the music data, from the music data, and adds (appends) another spatial characteristic data B to the music data to output the resulting data.
In this manner, the reproducing apparatus 3 according to the present invention reads out data recorded on the recording medium 1, and performs predetermined processing on the so read out data to separate the main data and the spatial characteristic data from each other in the so processed data. The reproducing apparatus then selects predetermined one of the spatial characteristic data thus separated from the main data. The reproducing apparatus then adds (appends) the so selected spatial characteristic data to the main data or subtracts (removes) the selected spatial characteristic data from the main data to output music data to which predetermined spatial characteristic data have been added (appended) or from which the spatial characteristic data have been subtracted (deleted). Hence, the music may be appreciated in a variety of different environments regenerated by the spatial characteristic data provided by the producer as music data reproducing environment.
Meanwhile, the reproducing apparatus 3 may also subtract, from the selected spatial characteristic data B, the spatial characteristic data A, separated from the main data, to generate differential spatial characteristic data C, to add the differential spatial characteristic data C further to the main data, already added by the spatial characteristic data A, to output the resulting data as music data for reproduction.
The main data, recorded on the recording medium 1, may also be picture data, such as motion pictures. In this case, data which will confer predetermined effects on the picture data may be recorded as spatial characteristic data on the recording medium 1.
By so doing, the user may enjoy the sound, such as that of the musical air or a motion picture, as if the sound is being reproduced in a variety of theaters, halls, live playing site, churches or outdoor playing sites. Since a variety of the spatial characteristic data, selected by the producer, have been recorded on the recording medium, the user is in a position to select optional spatial characteristic data for the same music source to appreciate the music or the motion picture under a variety of environments.
The spatial characteristic data may not be recorded on the recording medium 1 and may be stored in a database attached to the Internet. In this case, the system configuration is such that predetermined one of spatial characteristic data stored in a database is downloaded responsive to the user's request.
Such system for providing spatial characteristic data 4 will now be described. Referring to Fig.6, the system for providing spatial characteristic data 4 includes a database 5 and a reproducing apparatus 3. The database has stored therein a plural number of music data and a plural number of spatial characteristic data. The reproducing apparatus reproduces music data, downloaded from the database over the network, in accordance with the spatial characteristic data. Meanwhile, the constitution of the reproducing apparatus 3, used in the system for providing spatial characteristic data 4, is the same as that described above, and hence is not described in detail.
The database 5 is made up of a music database a, in which the plural music data have been stored, and a spatial characteristic database b, in which plural spatial characteristic data, obtained by a predetermined measurement method, have been stored. The spatial characteristic data, stored in the spatial characteristic database b, are each correlated with the music data stored in the music database a.
The sequence of operations for the user to download the music data by the system for providing spatial characteristic data 4 will now be explained with reference to the flowchart of Fig.7.
In a step ST120, the reproducing apparatus 3 is responsive to the actuation by the user to command the database 5 to supply predetermined music data. The user actuates the reproducing apparatus 3 to have desired music data downloaded from the database 5, to which the reproducing apparatus is attached over the network.
In a step ST21, the database 5 outputs music data and spatial characteristic database relevant to the music data, in response to a request for downloading music data. In the database 5, plural spatial characteristic data are associated at the outset with each music data by the producer. Meanwhile, the system for providing spatial characteristic data 4 may be configured for allowing the user to download all of the spatial characteristic data, thus associated with the music data, or for allowing the user to select and download only optional spatial characteristic data, thus associated with the music data.
In a step ST22, the reproducing apparatus 3 reproduces music data in accordance with the spatial characteristic data thus downloaded from the database 5.
The system for providing spatial characteristic data 4 may include a tolling process, in a step ST20, in downloading the music data. In the tolling step, tolling may be made each time musical data is downloaded, or the fee may be varied in dependence upon the number of the spatial characteristic data.
Thus, with the system for providing spatial characteristic data 4, according to the present invention, the music data, desired by the user, may be provided, along with the spatial characteristic data, from the database 5, attached to the system over a network, and is reproduced by the reproducing apparatus 3 owned by the user, based on the spatial characteristic data. Hence, the music may be enjoyed under a variety of environments regenerated by the spatial characteristic data provided by the producer as the reproducing environment for the music data.
It is noted that the data stored in the database 5 may be different than the music data and may, for example, be picture data, such as motion pictures. In this case, the data which will confer predetermined effects on the picture data are stored from the outset as spatial characteristic data in the spatial characteristic database b.
The present invention is not limited to the particular embodiments described above with reference to the accompanying drawings. It will be appreciated that the present invention may encompass various changes or corrections such as may readily be arrived at by those skilled in the art within the scope and the principle of the invention.

## Claims

1. A recording medium having recorded thereon predetermined main data and spatial characteristic data made up of the information on characteristics of a space in an environment different from the environment under which the main data is to be reproduced.

2. The recording medium according to claim 1 wherein said main data is picture data and/or music data.

3. The recording medium according to claim 1 wherein said spatial characteristic data include reflection characteristics and/or reverberation characteristics of the sound in a space in an environment different from the environment under which the main data is to be reproduced.

4. The recording medium according to claim 1 wherein a plurality of different spatial characteristic data have been recorded thereon.

5. The recording medium according to claim 1 wherein said spatial characteristic data are the information of characteristics of a space in an environment under which said main data has been recorded.

6. The recording medium according to claim 1 wherein identification data for said spatial characteristic data have been recorded on the recording medium.

7. The recording medium according to claim 6 wherein said identification data is the site and/or name of an optional reproduction environment under which said main data are reproduced.

8. A recording apparatus comprising:
multiplexing means for multiplexing predetermined main data and spatial characteristic data made up of the information on characteristics of a space in an environment different from the environment under which the main data is to be reproduced;
processing means for performing predetermined processing on data multiplexed by said multiplexing means; and
recording means for recording data processed by said processing means on a recording medium.

9. A recording method comprising:
a multiplexing step of multiplexing predetermined main data and spatial characteristic data made up of the information on characteristics of a space in an environment different from the environment under which the main data is to be reproduced;
a processing step of performing predetermined processing on data multiplexed by said multiplexing step; and
a recording step of recording data processed by said processing step on a recording medium.

10. A data processing apparatus comprising:
readout means for reading out predetermined main data and spatial characteristic data, made up of the information on characteristics of a space in an environment different from the environment under which the main data is to be reproduced, from a recording medium on which the predetermined main data and the spatial characteristic data have been recorded; and
processing means for performing predetermined processing for reproduction of said main data, based on said spatial characteristic data read out by said readout means.

11. A data processing method comprising:
a readout step of reading out predetermined main data and spatial characteristic data, made up of the information on characteristics of a space in an environment different from the environment under which the main data is to be reproduced, from a recording medium on which said predetermined main data and said spatial characteristic data have been recorded, and
a reproduction processing step of performing predetermined processing for reproduction of said main data, based on said spatial characteristic data read out by the readout step.

12. A data outputting apparatus comprising:
a first database in which a plurality of main data have been stored;
a second database in which spatial characteristic data, made up of the information on characteristics of a space in an environment different from the environment under which the main data is to be reproduced, have been stored;
selection means for selecting predetermined main data from said first database;
first readout means for reading out the main data, selected by said selection means, from said first database;
second readout means for reading out the spatial characteristic data, associated with the main data read out by said first readout means, from said second database; and
outputting means for outputting, in unison, the main data read out by said first readout means and the spatial characteristic data read out by said second readout means.

13. A data outputting method comprising:
a first readout step of reading out predetermined main data from a first storage unit where a plurality of main data are stored;
a second readout step of reading out, from a second storage unit where spatial characteristic data made up of the information on characteristics of a space in an environment different from an environment, where said main data is to be reproduced, have been stored, the spatial characteristic data associated with the main data read out in said first readout step; and
an outputting step of outputting, in unison, the main data read out by said first readout step and the spatial characteristic data read out by said second readout step.
